Europäisches Patentamt

**European Patent Office**

Office européen des brevets

(19)

(11) Publication number: **0 0 14 015**
A1

(12) # EUROPEAN PATENT APPLICATION

(21) Application number: **80200042.2**

(22) Date of filing: **17.01.80**

(51) Int. Cl.³: **B 65 D 90/54**

(30) Priority: **30.01.79 BE 57579**

(71) Applicant: **Lourdaux, Jan H., Lakenmakerstraat 15/2, B-2400 Mol (BE)**

(43) Date of publication of application: **06.08.80**
**Bulletin 80/16**

(72) Inventor: **Lourdaux, Jan H., Lakenmakerstraat 15/2, B-2400 Mol (BE)**

(84) Designated Contracting States: **AT CH DE FR GB IT LU NL SE**

(74) Representative: **Bockstael, Daniel et al, Arenbergstraat 13, B-2000 Anvers (BE)**

(54) **Apparatus for shutting off and for metered discharge of all kinds of non-liquid materials from silos and the like.**

(57) Apparatus for shutting off and metered discharge of all kinds of non-liquid materials from silos and the like, consisting of a housing attached under the silo outlet, featuring that said housing (3) comprises a shut-off grid (6) and a pressure grid (5) which are elastically interlinked, each of the said grids (6-5) being set with a number of strips (16-9) and said housing (3) being equipped with means enabling to bring the said grids (6-5) into movement with respect to one another.

EP 0 014 015 A1

1

"Apparatus for shutting off and for metered discharge of all
kinds of non-liquid materials from silos and the like".

The present patent refers to an apparatus for shutting-off and
metered discharge of all kinds of non-liquid materials from
silos and the like, mainly consisting of a housing attached
under the silo outlet, featuring that said housing comprises a
shut-off grid and a pressure grid which are elastically interlinked, each of the said grids being set with a number of
strips and said housing being equipped with means enabling to
bring the said grids into movement with respect to one another.

The discharge of non-liquid materials from silos or bunkers
can be effected by means of vibrating troughs and the like,
but these offer several disadvantages, such as amongst others,
the impossibility to allow accurate metering. To remedy this
state of things, some devices have already been proposed,
which are fitted under a silo outlet and enable to move a grid
with respect to the silo or its content. Such a device e.g.
has been described already in Dutch Patent Application open to
inspection under No 76 04 881. This refers to a device equipped with a part movable to and fro, comprising a number of
horizontally installed parallel strips, directed amongst them
in such a manner that, when said part is stopped, arching of
material occurs between the upper edge of a frist strip and a
spot on an adjacent strip, whereas the angle included between
each strip and the horizontal line is always larger than the angle of repose of the material to be discharged. Metering is then effected by breaking up the material arches by vibration of the grid.

It is obvious that the field of application of such an apparatus is very limited as it only enables to meter materials having approximately the same angle of repose.

The same Dutch Patent Application open to inspection proposes a partial solution to this problem. This solution consists of fitting the said strips in a pivoting manner so that their angle of slope can be adapted in accordance with nature of the bulk material to be discharged. However, this solution is not satisfactory for fine-grained non-cohesive materials, since the smallest adjustable strip slope then exceeds the angle of repose of this kind of material.

It was found that with the presently known devices, accurate metering of cohesive and semi-cohesive materials is impossible, since breaking up of arches can no longer be effected regularly. Also, capacity lowers as the materials become more cohesive. So metering greatly depends on the intrinsic properties of the material to be discharged, while capacity largely depends on silo pressure.

The present invention aims at proposing an apparatus not showing the above drawbacks of formerly known devices and universally applicable for metering any kind of non-liquid material, regardless of granulometry and intrinsic cohesion without requiring the least re-adjustment in operation.

The universal apparatus according to the invention mainly consists of a housing installed under the silo outlet and comprising two individually different grids, viz. a pressure grid and a shut-off grid. Both grids are elastically interlinked, so that they can undergo a slight relative displacement with respect to one another.

The pressure grid is securely fixed to the housing, which is suspended by spring blades and suitable means of attachment to a suspension flange of the silo outlet. A flexible and dust-tight adapter between housing and suspension flange is obtained by interconnecting both parts by a rubber strap.

The shut-off grid is also connected to said suspension flange by means of spring blades, connecting sleeves and clamping parts, whereas flexible sealing is obtained here by rubber grommets.

As a whole, the apparatus is composed as a mass spring system with two masses vibrating in opposite phase, viz. the housing and pressure grid on one hand and the shut-off grid on the other hand.

The housing is securely fixed to a motor support carrying a motor casing. The motor itself consists of an electromagnet the armature if which is adequately linked to the shut-off grid.

When the electromagnet is energized by alternating current, a sinusoidal vibration is transmitted to the armature and consequently to the shut-off grid. Due to the motor being spring-mounted to the housing, the latter will also be subjected to sinusoidal vibration as a reaction to the former vibration. It is obvious that the vibrating period of the housing will be shifted over 180 degrees with respect of the period of the former movement. So the pressure and shut-off grids will vibrate in opposite phare at the same frequency but with different amplitudes. This difference in amplitude directly results from the specific design of the apparatus, by which the first vibrating mass, consisting of the housing, motor casing, magnet core and coils, the motor support, connecting elements and pressure grid, amounts to about two or three times the second vibrating mass comprising the shut-off grid, the armature and their connecting elements.

The pressure grid mainly consists of a number of parallel vertically directed strips in a stepped downward arrangement enabling to catch the silo pressure, feeding the shut-off grid and with holding the bulk material before the slots of the shut-off grid.

The shut-off grid also consists of a set of parallel strips in a stepped downward arrangement and so directed that the angle included between the horizontal and the imaginary line connecting the initial point of each strip to the end of the following strip is always smaller than the smallest angle of repose of any potential material to be metered.

Due to the periodical vibration of the shut-off grid, the bulk material is pushed out against the vertical strips of the pressure grid. This pushing out is moreover stimulated by the, although small, opposite vibration of the pressure grid. When the apparatus is not vibrating, the silo is shut off by the angles of repose the material forms between the shut-off gridstrips. So metering is purely volumetric, regardless of the properties of the bulk material to be discharged. With regard to the formely known devices, the capacity range is much wider both up and down, and moreover capacity is independent of silo pressure.

For better understanding of the invention, it will be described below in greater detail, based on a non-limitative embodiment referring to the attached illustrations in which :

Figure 1 shows a cross section of the apparatus according to the invention;

Figure 2 is a top view with partial section of this apparatus and

Figure 3 is a view of the apparatus as per arrow F3 of Figure 1 with partial section.

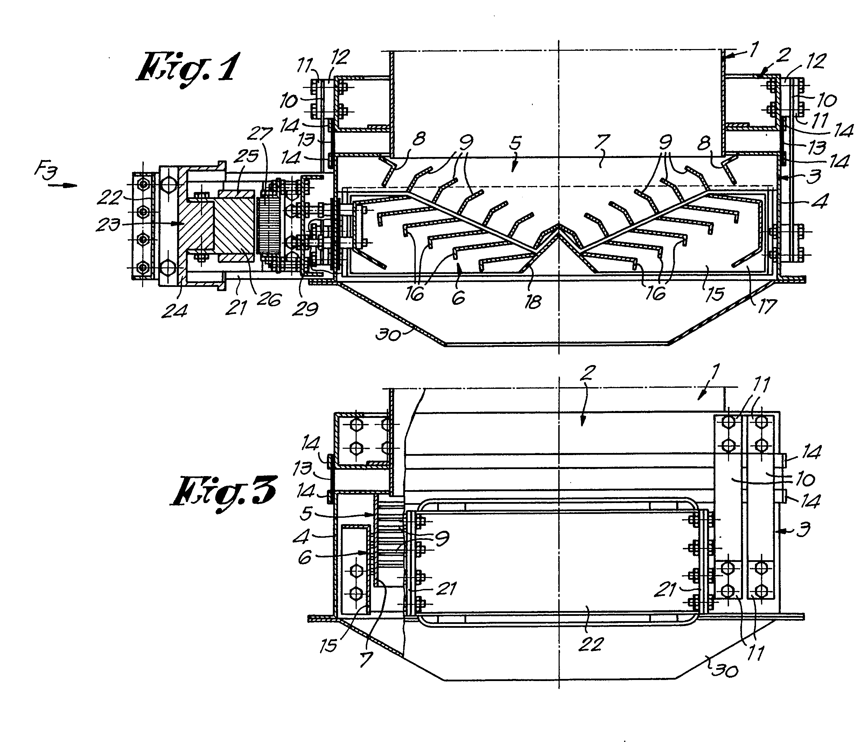

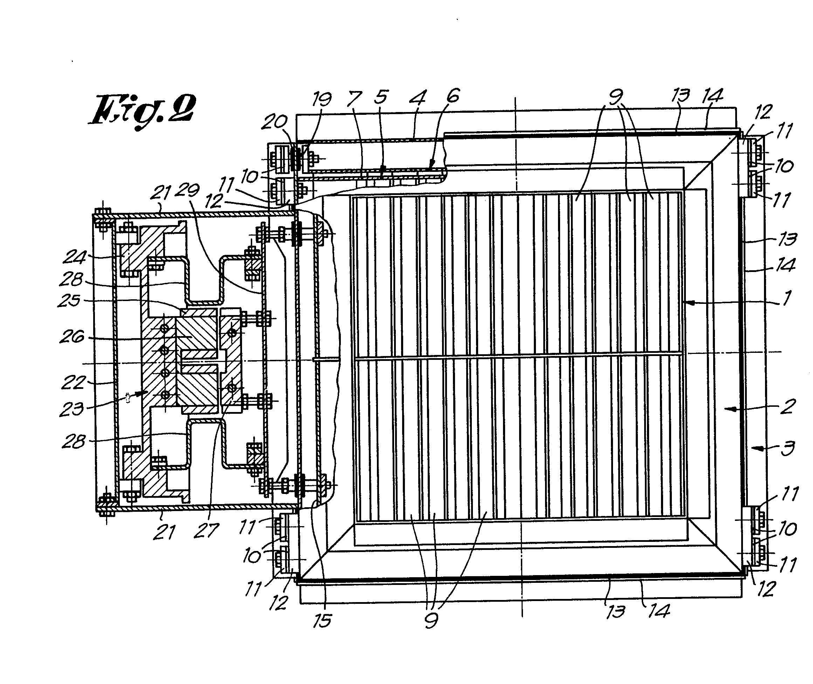

The silo outlet 1 is provided with a suspension flange 2 to which is attached the housing 3 of the apparatus according to the invention. This housing 3 mainly consists of four lateral housing sections 4 and comprises a pressure grid 5 and a shut-off grid 6. Pressure grid 5 is securely fastened to housing 3 and mainly consists of a frame 7, two lateral strips 8 and a number of parallel gradually lowering upright strips 9.

By preference, pressure grid 5 and consequently also housing 3 are suspended to suspension flange 2 by means of spring blades 10, secured by clamping block 11 and spacers 12. A flexible and dust-tight sealing between housing 3 and suspension flange 2 is ensured by interconnecting the latter parts by a rubber strap 13, fastened by clamps 14 at both housing 3 and flange 2.

The shut-off grid mainly consists of a frame 15 carrying a number of parallel gradually lowering strips 16. In addition, shut-off grid 6 preferentially comprises a reinforcement rib 17 and a support element 18 for said reinforcement rib. Strips 16 are so arranged with respect to each other that the angle included between the horizontal and the imaginary line connecting the initial point of each strip to the end of the following strip is always smaller than the smallest angle of repose of the potential material to be discharged. Shut-off grid 6 is also connected to suspension flange 2 through spring blades 10 and connecting sleeves 19.

As a flexible sealing, rubber grommets 20 can be used here for example.

By means of connecting elements 21, housing 3 is linked to motor support 22 carrying motor 23, mainly consisting of a motor casing 24, magnet coils 25, a magnet core 26 and an armature 27.

The motor casing 24, as well as the magnet core 26 and coils 25 are securely fastened to one end of a set of springs 28 whereas the opposite ends of said springs 28 are connected, through a connecting element 29, respectively to armature 27 and shut-off grid 6.

Moreover, a reducing funnel 30 is attached to the bottom of housing 3.

According to the invention, the apparatus is designed as a mass spring system comprising two masses vibrating in opposite phase, viz. housing 3, pressure grid 5 and reducing funnel 30 on the one hand, and shut-off grid 6 on the other hand. When the electromagnet of motor 23 is energized by alternating current, armature 27 and consequently shut-off grid 6 are subjected to periodic vibration. Due to the effect of action and reaction, as well as to the fact that armature 27 and shut-off grid 6 are connected to housing 3 and pressure grid 5 through springs 28, housing 3 and pressure grid 5 will also start periodic vibration but with a phase shift of 180 degrees in relation to the former periodic vibration. So shut-off grid 6 and pressure grid 5 will vibrate at the same frequency but in opposite phase. Moreover, the amplitude of both vibrating movements will be different due to the instrinsic design of the apparatus. It is evident of course that mass $M$ comprising housing 3, pressure grid 6, motor casing 24, magnet core 26, coils 25, motor support 22, connecting elements 21 and reducing funnel 30 is considerably larger than the second

mass $\underline{m}$, consisting of shut-off grid $\underline{6}$, connecting element $\underline{29}$ and armature $\underline{27}$.

By preference, the apparatus according to the invention will be built so that mass $\underline{M}$ is two to three times larger than mass $\underline{m}$. Based on the law of action and reaction the following relation will result :

$$a_M . M = a_m . m \qquad \text{in which } a_M = \text{maximum acce-leration of M}$$

$$a_m = \text{maximum acce-leration of m}$$

Moreover :

$$a_M = 1/2 . A_M . (2 \pi f)^2$$
$$\text{and} \quad a_m = 1/2 . A_M . (2 \pi f)^2 \quad \text{in which} : A_M = \text{vibrating amplitude of M}$$

$$A_m = \text{vibrating amplitude of m}$$

$$f = \text{vibrating frequency of M and m}$$

Relative displacement $A_t$ of armature $\underline{27}$ in relation to coils $\underline{25}$ is found by :

$$A_t = A_M + A_m .$$

Taking the above set of relations into account, the following set of equations may be deduced :

$$1/2 . M . A_M . (2 \pi f)^2 = 1/2 . m . A_m (2 \pi f)^2$$
$$A_M + A_m = A_t$$

which results into :

$$A_M = \frac{A_t . m}{M + m} \qquad \text{and} \qquad A_m = \frac{A_t . m}{M + m}$$

A practical example in which the relative displacement $A_t$ would amount to 3 mm and implying that M = 100 kg and m = 50 kg, enables to deduce that the vibrating amplitude $A_M$ = 1 mm whereas amplitude $A_m$ = 2 mm.

So it is quite obvious that vibrating amplitudes are inversely proportional to the masses.

The design of pressure grid 5 according to the invention allows to catch the silo pressure and to prevent arching in the silo. The judicious arrangement of strips 9 moreover enables to feed shut-off grid 6 and to stop the bulk material before the slots of said shut-off grid.

The strips 16 of shut-off grid 6 are so directed with respect to each other and arranged in such a pattern that when the apparatus is not vibrating, the silo is shut off by formation of angles of repose between each of the strips.

When shut-off grid 6 starts vibrating, the bulk material is pushed out against the strips 9 of pressure grid 5. This effect is still increased by counter-vibration of pressure grid 5 itself. So discharge of the bulk material occurs by pushing the material out by combined operation of pressure and shut-off grids, the shut-off grid serving as vibration mass to the pressure grid.

It is obvious that the vibrating amplitude of pressure grid 5 must be small due to the steep slope of its strips 9, because otherwise resistance due to the silo load would be too large. But in order to ensure sufficient capacity, the vibrating amplitude of shut-off grid 6 should be relatively wide.

Of course a great many alternative constructions can be found to the embodiment described above by way of example, without therefore exceeding the scope of the present invention.

1  0014015

Claims.

1.- Apparatus for shutting off and metered discharge of all kinds of non-liquid materials from silos and the like, consisting of a housing attached under the silo outlet, featuring that said housing (3) comprises a shut-off grid (6) and a pressure grid (5) which are elastically interlinked, each of the said grids (6-5) being set with a number of strips (16-9) and said housing (3) being equipped with means enabling to bring the said grids (6-5) into movement with respect to one another.

2.- Apparatus according to claim 1, featuring that said pressure grid (5) is securely fastened to said housing (3).

3.- Apparatus according to claim 1, featuring that said shut-off grid (6) is set with a number of parallel strips, (16) so arranged that the angle included between the horizontal and an imaginary line connecting the initial point of each strip to the end of the following strip is always smaller than the smallest angle of repose of any potential material to be metered.

4.- Apparatus according to claim 1, featuring that said pressure grid (5) is set with a series of parallel near-vertically directed strips (9) in a stepped, lowering arrangement.

5.- Apparatus according to claim 1, featuring that the said means consist of an electric motor (23) attached to said housing (3), the motor armature (27) being linked to said shut-off grid (6) through springs and connecting elements (29).

*Fig.1*

*Fig.3*

F3

**Fig.2**

| Category | Citation of document with indication, where appropriate, of relevant passages | Relevant to claim | CLASSIFICATION OF THE APPLICATION (Int. Cl. ³) |
|---|---|---|---|
| X | US - A - 2 869 991 (WILLIAMS N.)<br>* Column 2, line 68 - column 3, line 30; figure 1 * | 1-4 | B 65 D 90/54 |
| | DE - C - 931 218 (HAVER C.)<br>* Claims 1,2,3,4,5; figures * | 1,2,4, 5 | |
| | DE - C - 160 982 (F. KRUPP)<br>* Claim * | 1 | **TECHNICAL FIELDS SEARCHED (Int.Cl. ³)** |
| | FR - A - 1 178 669 (E. BUHRER)<br>* Abstract; figures * | 1,2,4 | B 65 G<br>B 65 D |
| | DE - U - 6 751 470 (BRAUN-ANGOTT)<br>* Abstract point 1; figures * | 1-3,5 | |

**DOCUMENTS CONSIDERED TO BE RELEVANT**

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 16-04-1980 | V. ROLLEGHEM |

EPO Form 1503.1    06.78